# EUROPEAN PATENT SPECIFICATION

(11) **EP 2 413 007 B1**
(45) Date of publication and mention of the grant of the patent: **12.04.2017**
(21) Application number: 11175375.2
(22) Date of filing: 26.07.2011
(51) Int. Cl.: F16K 3/02, F16K 27/04

(54) **Process for manufacturing guillotine valves**
Verfahren zur Herstellung von Fallschiebern
Procédé de fabrication de robinets-vannes à guillotine

(30) Priority: 26.07.2010 ES 201031152
(43) Date of publication of application: 01.02.2012
(73) Proprietor: Orbinox Valves International, S.L., 20270 Anoeta Guipuzcoa (ES)
(72) Inventor: Azurmendi Zabaleta, Joseba, 20270 Anoeta, GUIPUZCOA (ES)
(74) Representative: Pons

(56) References cited:
- DE-A1- 10 112 642
- US-A- 3 118 197
- US-A- 3 624 882
- US-A- 5 004 210

## Description

### OBJECT OF THE INVENTION

The present invention relates to the technical field of regulation of flow or fluid flows, more specifically to flow valves.

The object of the invention consists of a bi-directional gate-type flow valve wherein passage of the fluid flow is closed by lowering a slide-plate which closes the opening of the valve.

### BACKGROUND OF THE INVENTION

The characteristics of the gate-type valve and its technical development are allowing their use to spread to more applications which have been historically dominated by other models of valves with excellent results. We can highlight those applications in which the fluid is loaded with solids such as water treatment both for ON-OFF use as in regulation.

The guillotine valve is well-known for allowing total flow ensuring small load losses in the installation versus other types of valves wherein the disc is in the flow passageway. This allows minimizing the problems derived from the interference between the flow and the moving elements of the valve.

The design of the "gate" valve allows the stainless steel disc to cut-off the flow ensuring the correct closing despite the fluid being loaded with solids. Depending on each application, the geometry, materials and superficial treatment of the gate/disc are suitably modified to ensure its correct operation.

This geometry in the shape of a gate makes the valve very flat and slender compared with other types of valves resulting in a lightweight and inexpensive product. This lightness and less between the faces makes it easy to install and provide maintenance.

The market has traditionally demanded unidirectional guillotine valves (except in central Europe where the bi-directional design has been the most common in the water sector). The operating principle of these valves is quite intuitive. The disc or slide-plate lowers, wedges in the lower part compress it against an elastomeric seat so securing the closing in one flow direction. So that if this is in the opposite direction, against the seat, the disc tends to separate from the seat causing leakage. This effect increases the higher the working pressure is.

However, the market trend is shifting and the demand for bi-directional guillotine valves is increasingly common. The main reason for this change is the advantage that the bi-directional valve has since the problems caused by the incorrect installation of the valve are avoided.

To achieve the closure in a bi-directional guillotine valve there are different solutions available in the market with different advantages and drawbacks. Orbinox has launched a new design which combines their advantages providing a unique and innovative solution to the guillotine valve sector. This development is in patent pending stage.

The first difference is how the closing is secured between the seat and the disc:
- Some manufacturers opt for a simple solution mounting a double seat (at both sides of the disc) with the great drawback that in the lower part there is a slot (rather a space) which usually fills up with solids which does not allow the proper closing of the valve.
- A single seat along the perimeter of the gate/disc that avoids the previous problem since the seat does not have any sort of cavity.

This second solution of a single seat along the perimeter in the body of the valve is technically much better but entails a series of technical difficulties for its manufacture since it is necessary to perfectly control the adjustment between the body-seat-disc.

This has led manufacturers to develop two (2) types of solutions:
- Split body with a machined interior of the two half bodies to house the seat and thus control the adjustment. The main disadvantage of this solution is its greater cost and need for maintenance.
- A mono-block body with inner surpluses which secure the adjustment between the slide-plate and the seat because the tolerance of casting bodies is not sufficiently good. This makes the tightening between the slide-plate and seat too great. This causes high working torques and premature wear of the seats although it is cheaper and does not require maintenance.

Such solutions are disclosed in documents DE 101 12 642 A1 and US 3,624,882. Currently, valves are manufactured with different systems and processes. The most common is the machining of the parts for their later assembly joining them by using a joint and later screwing them together. This presents the problem that the cast parts do not fit, so when the rubber seals are placed they are forced to make different pressures, to have a greater wear and to have water leakage.

### DESCRIPTION OF THE INVENTION

The process object of the invention makes it possible to produce a bi-directional mono-block (monolithic) disc or guillotine valve, which provides a solution to the previously mentioned problems; said solution is provided by machining the inside of the mono-block body combining the advantages of both solutions proposed in the previous paragraph.

For this purpose, first the body of the guillotine valve is manufactured wherein later a precision interior machining is done from the mono-block or monolithic piece using a machining tool in the shape of a spear tip.

Said precision machining is done with a tool or spear developed for said purpose which makes it possible to define by machining, or several machining processes, several relevant areas for the valve among them the areas which house the joints that can provide airtight sealing to said valve. Later, the parts necessary for its operation are mounted on the already machined body with minimal tolerances, such as the seat, or the working mechanism which can be electronic or manual actuators which move the disc or slide-plate.

### DESCRIPTION OF THE DRAWINGS

To complement the description that is being carried out and in order to provide better understanding of the characteristics of the invention, according to a preferred example of a practical embodiment thereof, a series of drawings are attached, wherein for illustrative but non-limiting purposes, the following has been represented:

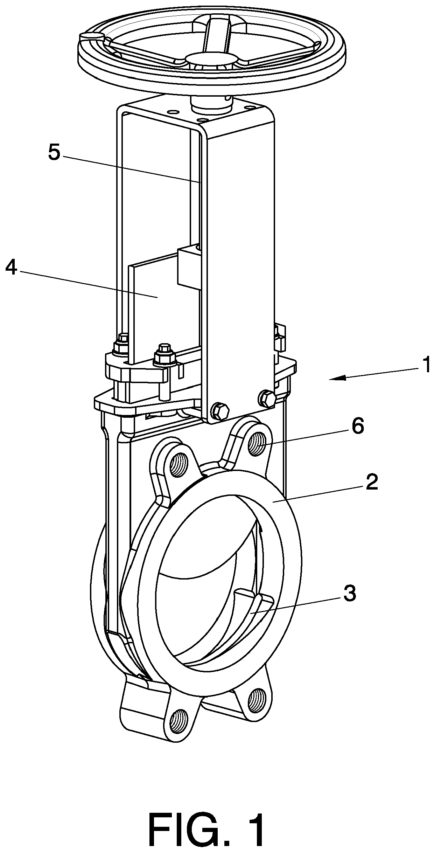

Figure 1.- Shows a perspective view of the valve object of the invention.

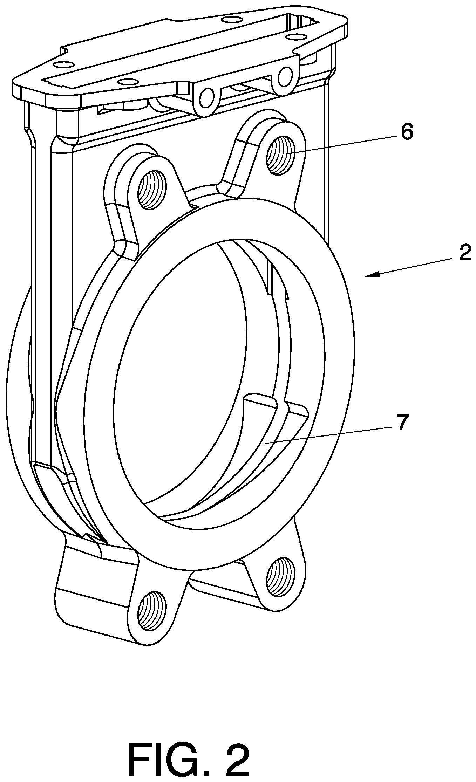

Figure 2.- Shows a perspective view of the body of the valve object of the invention.

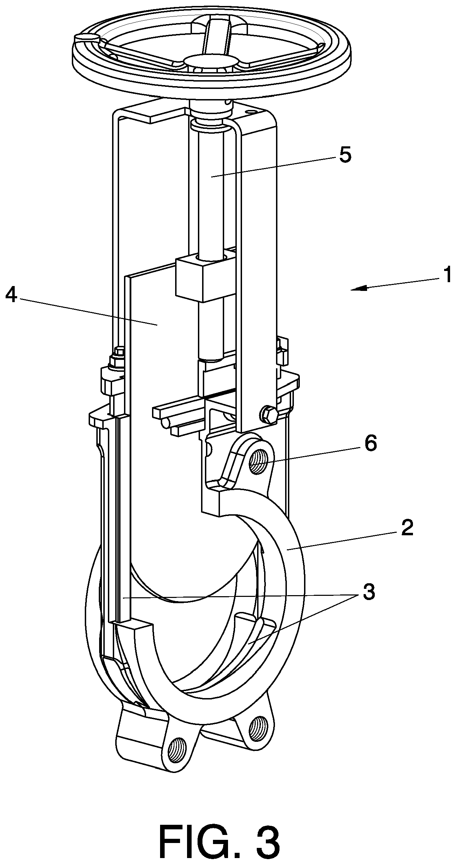

Figure 3.- Shows a perspective view of the valve object of the invention with one section.
Figure 4.- Shows a sectional view of the valve showing the machining tools used for its manufacture.

### PREFERRED EMBODIMENT OF THE INVENTION

In view of the figures, a preferred embodiment of the manufacturing process of the valves (1) object of this invention is described below.

First, a metal monolithic body (1) is moulded through casting which makes up the main part of the valve; the mould comprises a male to generate a through-hole in the central part of said body (2) wherethrough the liquid shall pass when the slide-plate (4) is raised by means of actuation means (5) thus opening the flow of the valve (1).

Once the body (2) is obtained it is then machined, one of the machining processes to be performed consists of drilling bores (6), which can be threaded, around the through-hole of the body (2) which will serve to fix the valve (1) to the tubes or pipework whose flow is to be controlled.

The part of the process which requires greater precision and which provides the object of the invention with the differentiating characteristic is provided by the machining of a notch (7) which houses an elastomeric seat (3) and the machining of a slot (10) in the upper part of the body (2) which joins the central hole with said upper part, going through its central part.

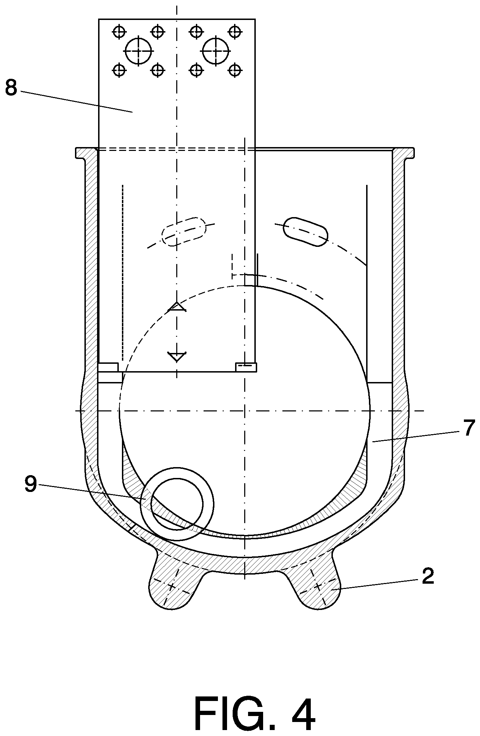

To make the notch (7) the body is machined through its lower part using a specific machining tools (8,9) designed for this process which one of them has the shape of a spear. As shown in fig. 4, the machining tools (8,9) are used in such a way that a first machining tool (8) is used for machining straight sections whereas a second machining tool (9) is used for curved sections.

Once the notch is finished (7) the elastomeric seat (3) is placed therein, which is designed to house the perimeter of the gate and which can slide through the inside of the body to open or close the through-hole controlling the flow through its inside activated by the actuation means (5) once it has been fixed to the upper part of the body (2).

Said actuation means (5) can be manual or automatic, and the latter can comprise an electronic control to operate it.

In an even more preferred embodiment of the object of this invention, the slide-plate (4) and notch (7) of the seat (3) are also machined to adjust the closing of the valve (1).

In another even more preferred embodiment object of the invention a bonnet is added to the slide-plate (4) to create a tight seal between the uppermost part of said slide-plate (4) and the upper part of the body (2).

## Claims

1. Process for manufacturing guillotine valves (1) which comprise a slide-plate (4) which can slide through the inside of a slot (10) of the body (2) to open or close a circular opening thus controlling the flow of the valve (1) comprising a first step of moulding a monolithic metal body (2) through casting, said body (2) having a circular opening in its central part, **characterized in that** it further comprises the following steps:
- machining a slot in the upper part of the body (2) which internally joins the central hole with said upper part, and
- machining the inside of the through-hole of the body (2) and the slot (10) by its inner part using machining tools (8,9) to create a notch (7) for housing an elastomeric seat (3) designed to house the perimeter of the slide-plate (4) which can slide through the inside of the slot (10) of the body (2) to open or close the through-hole thus controlling the flow through the valve (1).

2. Process according to claim 1, **characterized in that** it further comprises fixing actuation means (5) to the upper part of the body (2) to activate the gate (4) making it slide jointly with the seat (3).

3. Process according to claim 1, **characterized in that** it further comprises machining bores (6) in the body (2) around the through-hole designed to house fastening means.

4. Process according to claim 3, **characterized in that** it further comprises a threading in the bores (6).

5. Process according to claim 1, **characterized in that** it comprises machining the slide-gate (4) and the notch (7) of the seat (3) to adjust the closing of the valve (1).

6. Process according to claim 1, **characterized in that** it comprises adding a bonnet to the slide-gate (4) to create a tight seal between the upper part of the slide-gate (4) and the upper part of the body (2).

## Patentansprüche

1. Verfahren zur Herstellung von Fallschiebern (1), die eine Gleitplatte (4) umfassen, welche durch das Innere eines Schlitzes (10) des Körpers (2) gleiten kann, um eine kreisrunde Öffnung zu öffnen oder zu schließen und somit den Fluss des Fallschiebers (1) zu kontrollieren, das einen ersten Schritt des Formens eines monolithischen Metallkörpers (2) durch Gießen umfasst, wobei dieser Körper (2) in seinem mittleren Bereich eine kreisrunde Öffnung aufweist, **dadurch gekennzeichnet, dass** es weiterhin folgende Schritte umfasst:
- die Bearbeitung eines Schlitzes im oberen Bereich des Körpers (2), der das Mittelloch mit diesem oberen Bereich intern verbindet, und
- die Bearbeitung des Innern des Durchgangslochs des Körpers (2) und des Schlitzes (10) an seinem inneren Bereich unter Verwendung von Bearbeitungswerkzeugen (8, 9), um eine Kerbe (7) zur Aufnahme eines elastomeren Sitzes (3) zu schaffen, der zur Aufnahme des Umfangs der Gleitplatte (4) ausgelegt ist, die durch das Innere des Schlitzes (10) des Körpers (2) gleiten kann, um das Durchgangsloch zu öffnen oder zu schließen und somit den Fluss durch den Schieber zu kontrollieren.

2. Verfahren nach Anspruch 1, **dadurch gekennzeichnet, dass** es weiterhin das Anbringen von Antriebsmitteln (5) an dem oberen Bereich des Körpers (2) umfasst, um den Schieber (4) zu aktivieren, sodass er gemeinsam mit dem Sitz (3) gleitet.

3. Verfahren nach Anspruch 1, **dadurch gekennzeichnet, dass** es weiterhin die Bearbeitung von Bohrungen (6) im Körper (2) um das Durchgangsloch herum umfasst, die zur Aufnahme von Befestigungsmitteln ausgelegt sind.

4. Verfahren nach Anspruch 3, **dadurch gekennzeichnet, dass** es weiterhin eine Einfädelung in den Bohrungen (6) umfasst.

5. Verfahren nach Anspruch 1, **dadurch gekennzeichnet, dass** es die Bearbeitung des Absperrschiebers (4) und der Kerbe (7) des Sitzes (3) umfasst, um das Schließen des Fallschiebers (1) einzustellen.

6. Verfahren nach Anspruch 1, **dadurch gekennzeichnet, dass** es das Anfügen einer Haube an den Absperrschieber (4) umfasst, um eine feste Abdichtung zwischen dem oberen Bereich des Absperrschiebers (4) und dem oberen Bereich des Körpers (2) zu erzielen.

## Revendications

1. Procédé de fabrication de robinets-vannes à guillotine (1) qui comprend une plaque coulissante (4) qui peut coulisser à l'intérieur d'une fente (10) du corps (2) pour ouvrir ou fermer une ouverture circulaire en contrôlant ainsi l'écoulement du robinet-vanne (1) comprenant une première étape de moulage d'un corps métallique monolithique (2) par coulage, ledit corps (2) possédant une ouverture circulaire dans sa partie centrale, **caractérisé en ce qu'**il comprend en outre les étapes suivantes :
- usiner une fente dans la partie supérieure du corps (2) qui intérieurement relie le trou central à ladite partie supérieure, et
- usiner l'intérieur du trou traversant du corps (2) et la fente (10) par sa partie interne en utilisant des outils d'usinage (8, 9) pour créer une encoche (7) destinée à loger un siège élastomère (3) conçu pour loger le périmètre de la plaque coulissante (4) qui peut coulisser à l'intérieur de la fente (10) du corps (2) pour ouvrir ou fermer le trou traversant en contrôlant ainsi l'écoulement dans le robinet-vanne (1).

2. Procédé selon la revendication 1, **caractérisé en ce qu'**il comprend en outre la fixation de moyens d'actionnement (5) à la partie supérieure du corps (2) pour activer la plaque (4) en la faisant coulisser conjointement avec le siège (3).

3. Procédé selon la revendication 1, **caractérisé en ce qu'**il comprend en outre l'usinage d'alésages (6) dans le corps (2) autour du trou traversant destinés à loger des moyens de fixation.

4. Procédé selon la revendication 3, **caractérisé en ce qu'**il comprend en outre un filetage dans les alésages (6).

5. Procédé selon la revendication 1, **caractérisé en ce qu'**il comprend l'usinage de la plaque coulissante (4) et de l'encoche (7) du siège (3) pour régler la fermeture du robinet-vanne (1).

6. Procédé selon la revendication 1, **caractérisé en ce qu'**il comprend l'ajout d'un capot à la plaque coulissante (4) pour créer un joint étanche entre la partie supérieure de la plaque coulissante (4) et la partie supérieure du corps (2).
